# EUROPEAN PATENT APPLICATION

(11) **EP 4 574 578 A1**
(43) Date of publication of application: **25.06.2025**
(21) Application number: 24213205.8
(22) Date of filing: 15.11.2024
(51) Int. Cl.: B60R 16/023

(54) **VEHICLE**

(30) Priority: 22.12.2023 JP 2023217224
(71) Applicant: TOYOTA JIDOSHA KABUSHIKI KAISHA, Aichi-ken, 471-8571 (JP)
(72) Inventor: YAMADA, Hiroyuki, Toyota-shi, 471-8571 (JP)
(74) Representative: TBK

(57) **Abstract**

A vehicle (10) includes a battery (26b), a relay unit (32), and at least one electric unit (40). The relay unit (32) includes a casing (34), at least one relay (36) that is disposed inside the casing (34) and that includes a first terminal and a second terminal, a first electric circuit (37) that is disposed inside the casing (34) and that electrically connects the battery (26b) to the first terminal of the relay (36), and a second electric circuit (38) that is disposed inside the casing (34) and that electrically connects the at least one electric unit (40) to the second terminal of the relay (36). The first electric circuit (37) is situated further toward an inward side of the vehicle (10) than the second electric circuit (38), in a right-left direction of the vehicle (10).

## Description

### BACKGROUND OF THE INVENTION

### 1. Field of the Invention

The technology disclosed in the present specification relates to a vehicle.

### 2. Description of Related Art

Japanese Unexamined Patent Application Publication No. 2020-088934 describes a relay unit installed in a vehicle. The relay unit electrically connects a battery of the vehicle and a plurality of on-board loads.

### SUMMARY OF THE INVENTION

When a vehicle collision occurs, there is a risk that the above relay unit may come into contact with a part of a vehicle body of the vehicle, another adjacent onboard unit, or the like. At this time, it is desirable to suppress effects of damage to a casing of the relay unit on an electric circuit inside the casing. The present specification provides technology for suppressing effects from damage to the casing of the relay unit on the electric circuit inside the casing.

The technology disclosed in the present specification is embodied as a vehicle. The vehicle includes a vehicle body, a plurality of wheels that supports the vehicle body, a motor that drives at least one of the wheels, a battery that is electrically connected to the motor, a relay unit electrically connected to the battery, and at least one electric unit that is electrically connected to the relay unit. The relay unit includes a casing, at least one relay that is disposed inside the casing and that includes a first terminal and a second terminal, a first electric circuit that is disposed inside the casing and that electrically connects the battery to the first terminal of the relay, and a second electric circuit that is disposed inside the casing and that electrically connects the at least one electric unit to the second terminal of the relay. The first electric circuit is situated further toward an inward side of the vehicle than the second electric circuit, in a right-left direction of the vehicle.

In the above-described vehicle, the relay is provided in the relay unit, and the electric circuit in the relay unit is divided into the first electric circuit and the second electric circuit with the relay as a boundary. The first electric circuit, which is electrically connected to the battery, is situated further on an inner side of the vehicle than the second electric circuit, in the right-left direction of the vehicle. According to such a configuration, even when the casing of the relay unit is damaged from a sideward direction of the vehicle, effects on the first electric circuit are suppressed. On the other hand, although there is a risk that the second electric circuit may be affected, the second electric circuit can be electrically disconnected from the battery by the relay.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a plan view of a vehicle illustrating relative positions of electric units;
FIG. 2 is a block diagram of the vehicle;
FIG. 3 is a side view of a vehicle rearward portion; and
FIG. 4 is a diagram illustrating an internal configuration of a relay unit.

### DETAILED DESCRIPTION OF EMBODIMENTS

In a first aspect of the present technology, as described above, a vehicle may include a vehicle body, a plurality of wheels that supports the vehicle body, a motor that drives at least one of the wheels, a battery that is electrically connected to the motor, a relay unit electrically connected to the battery, and at least one electric unit electrically connected to the relay unit. The relay unit may include a casing, at least one relay that is disposed inside the casing and that includes a first terminal and a second terminal, a first electric circuit that is disposed inside the casing and that electrically connects the battery to the first terminal of the relay, and a second electric circuit that is disposed inside the casing and that electrically connects the at least one electric unit to the second terminal of the relay. The first electric circuit may be situated further toward an inward side of the vehicle than the second electric circuit, in a right-left direction of the vehicle.

In a second aspect of the present technology, in addition to the above-described first aspect, the vehicle body may include a wheel well that accommodates one wheel of the wheels. In this case, at least one outside surface of the casing may face the wheel well in the right-left direction of the vehicle. According to such a configuration, in the event of a collision of the vehicle, there is a risk that the wheel well, which has a relatively high rigidity, will come into contact with the relay unit. In this case, the likelihood of the casing of the relay unit being damaged is even higher. However, adopting the present technology enables the effects of damage on the casing on the first electric circuit to be suppressed.

In a third aspect of the present technology, in addition to the first or second aspect described above, the vehicle body may include a rear compartment situated at a rearward portion of the vehicle body, and the relay unit may be disposed in the rear compartment. Note however, that in another aspect, the relay unit may be disposed in a front compartment situated at a forward portion of the vehicle body, or may be disposed below a floor panel of the vehicle body.

In a fourth aspect of the present technology, in addition to the above-described third aspect, the rear compartment may include a luggage room. The relay unit may be disposed in the rear compartment, and may be situated below the luggage room. According to such a configuration, even when placement of the relay unit is restricted in a relatively small space, the effects of damage to the casing on the first electric circuit can be suppressed.

According to a fifth aspect of the present technology, in addition to any one of the first to fourth aspects described above, the relay may be maintained in an open state while the vehicle is travelling. According to such a configuration, even in the event of a collision of the vehicle in which the second electric circuit is externally exposed, for example, the second electric circuit can be reliably disconnected from the battery.

In a sixth aspect of the present technology, in addition to the fifth aspects described above, the relay may be configured to electrically disconnect the second electric circuit from the battery when the relay is in the open state.

In a seventh aspect of the present technology, in addition to any one of the first to sixth aspects described above, the at least one electric unit may include a charging inlet to which an external direct current power supply is detachably connected.

According to an eighth aspect of the present technology, in addition to any one of the first to seventh aspects described above, the vehicle may further include an air conditioning compressor. In this case, the air conditioning compressor may be connected to the first electric circuit of the relay unit. That is to say, the relay unit may have a function of relaying between the battery and the air conditioning compressor.

According to a ninth aspect of the present technology, in addition to any one of the first to eighth aspects described above, the vehicle may further include an auxiliary battery and a direct current (DC)-to-DC converter. In this case, the auxiliary battery may be connected to the first electric circuit of the relay unit via the DC-to-DC converter. Also, the DC-to-DC converter may be configured to convert direct current electric power from the battery into low-voltage (e.g., 30 volts or lower) direct current electric power that is supplied to the auxiliary battery. That is to say, the relay unit may have a function of relaying between the battery and the auxiliary battery.

According to a tenth aspect of the present technology, in addition to any one of the first to ninth aspects described above, the vehicle may further include a power feed outlet, and an inverter for power feeding. In this case, the power feed outlet may be connected to the first electric circuit of the relay unit via the inverter. The inverter may also be configured to be capable of converting direct current electric power from the battery into alternating current electric power that is supplied to an outside of the vehicle through the power feed outlet. That is to say, the relay unit may have a function of relaying between the battery and the power feed outlet.

Hereinafter, representative and non-limiting specific examples of the invention will be described in detail with reference to the drawings. This detailed description is merely intended to provide those skilled in the art with details for carrying out the invention, and is not intended to limit the scope of the invention. Also, additional features and inventions disclosed below can be used separately or in conjunction with other features and inventions to provide further improved vehicles.

Furthermore, combinations of features and steps disclosed in the following detailed description are not essential for implementing the invention in the broadest sense, but are described only to explain representative embodiments of the invention. Further, the various features of the representative embodiments described above and below, as well as the various features recited in the independent and dependent claims, do not have to be combined in the exact specific embodiment described herein, or in the exact order recited, to provide additional and useful embodiments of the invention.

All features described in the present specification and/or the claims are intended to be disclosed individually and independently of one another, apart from the configuration of features described in the embodiment and/or claims, as limitations to the original disclosure and particular matters that are claimed. Further, all numerical ranges and group or cluster descriptions are intended to disclose their intermediate configurations as limitations to the original disclosure and particular matters that are claimed.

A vehicle 10 according to an embodiment will be described with reference to the drawings. The vehicle 10 according to the present embodiment is a battery electric vehicle (BEV). However, the vehicle 10 is not limited to a BEV, and may be another type of electrified vehicle, such as a hybrid electric vehicle (HEV) or a plug-in hybrid electric vehicle (PHEV).

Now, in the drawings, a direction FR indicates forward in a front-rear direction of the vehicle, and an opposite direction therefrom indicates rearward in the front-rear direction of the vehicle. Also, a direction LH indicates leftward in a right-left direction (or width direction) of the vehicle, and the opposite direction therefrom indicates rightward in the right-left direction of the vehicle. Moreover, a direction UP indicates an upward direction in an up-down direction of the vehicle, and the opposite direction therefrom indicates a downward direction in the up-down direction of the vehicle. In the present specification, a forward side in the front-rear direction of the vehicle, a rearward side in the front-rear direction of the vehicle, a leftward side in the right-left direction of the vehicle, a rightward side in the right-left direction of the vehicle, an upper side in the up-down direction of the vehicle, and a lower side in the up-down direction of the vehicle may be referred to simply as forward side, rearward side, leftward side, rightward side, upper side, and lower side, respectively.

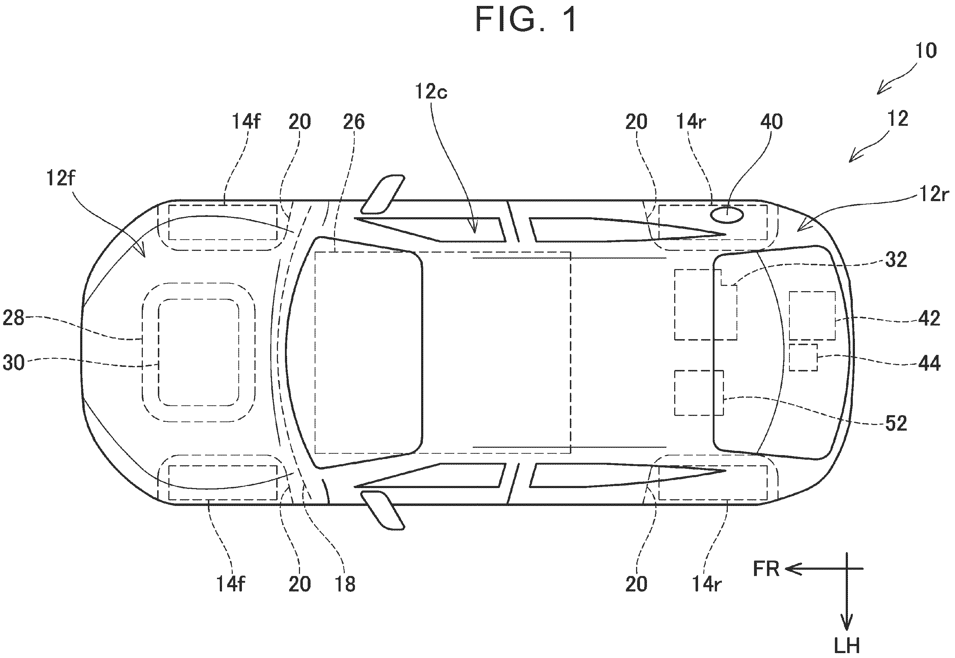

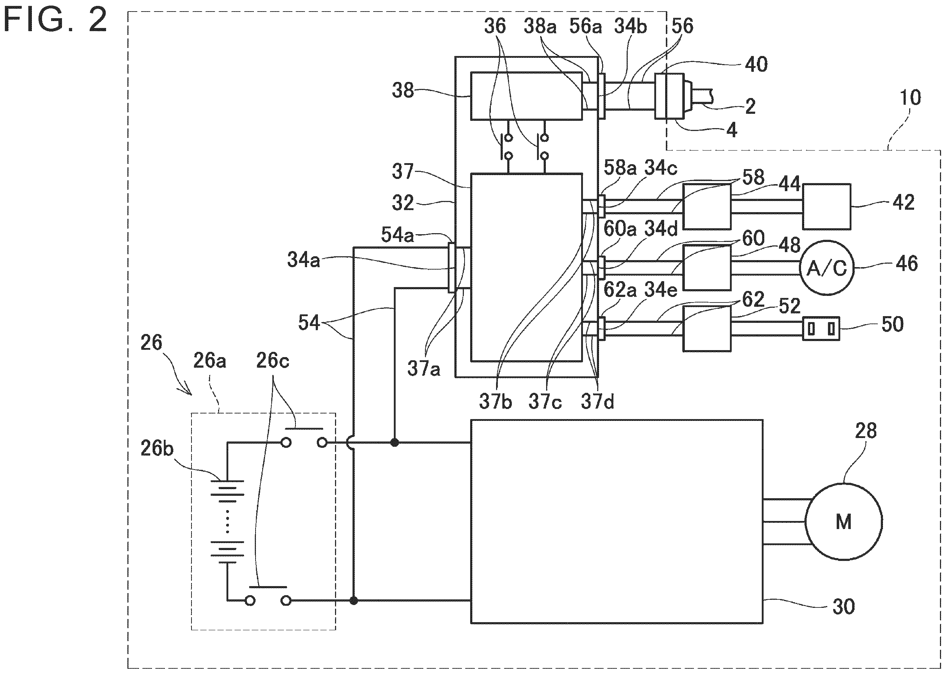

As illustrated in FIGS. 1 and 2, the vehicle 10 includes a vehicle body 12 and a plurality of the wheels 14f and 14r. The vehicle body 12 is made of, for example, a metal, such as a steel-based material, an aluminum-based material, or the like. The wheels 14f and 14r support the vehicle body 12. The wheels 14f, 14r include a pair of front wheels 14f situated at a forward portion of the vehicle body 12, and a pair of rear wheels 14r situated at a rearward portion of the vehicle body 12. The front wheels 14f are each situated on the right and left of the vehicle body 12. The rear wheels 14r are each situated on the right and left of the vehicle body 12.

An interior of the vehicle body 12 defines a cabin 12c, a front compartment 12f, and a rear compartment 12r. The front compartment 12f is situated at the forward portion of the vehicle body 12. The rear compartment 12r is situated at the rearward portion of the vehicle body 12. The cabin 12c is configured to be boardable by occupants. The cabin 12c is situated between the front compartment 12f and the rear compartment 12r. The vehicle body 12 has a floor panel 16, a dash panel 18, and a plurality of wheel wells 20. The floor panel 16 defines a floor of the cabin 12c. The dash panel 18 is interposed between the cabin 12c and the front compartment 12f. Each wheel well 20 accommodates a corresponding one of the wheels 14f and 14r. Wheel wells 20 that accommodate the front wheels 14f are situated at the ends of the front compartment 12f in the right-left direction. Wheel wells 20 that accommodate the rear wheels 14r are situated at the ends of the rear compartment 12r in the right-left direction.

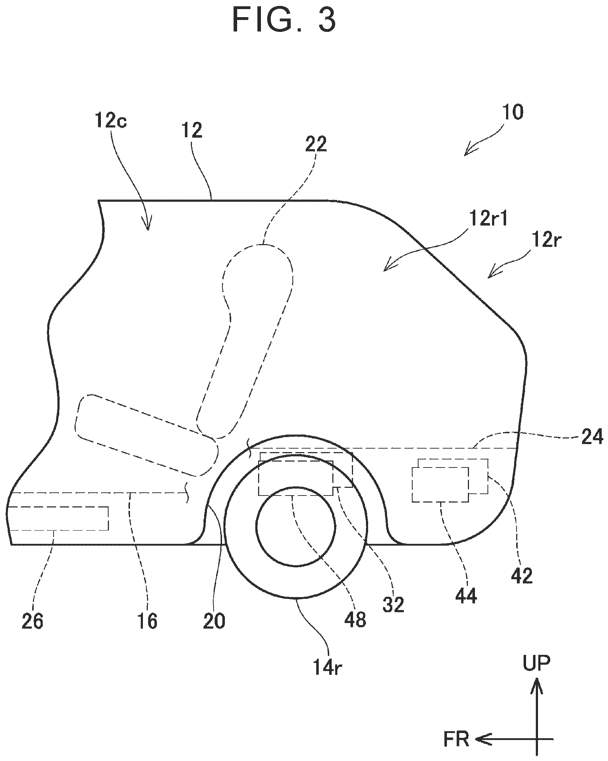

As illustrated in FIG. 3, a seat 22 for occupants of the vehicle 10 to be seated in is disposed in the cabin 12c. The seat 22 is a rear seat that is disposed at a rearward portion of the cabin 12c. The rear compartment 12r is situated rearward of the seat 22. A luggage room 12r1 is further defined at an upper portion of the rear compartment 12r. The vehicle body 12 has a luggage floorboard 24 disposed in the rear compartment 12r. The luggage floorboard 24 defines a floor of the luggage room 12r1.

As illustrated in FIGS. 1 to 3, the vehicle 10 includes a battery unit 26, a motor unit 28, a power control unit (PCU) 30, a relay unit 32, a charging inlet 40, an auxiliary battery 42, a direct current (DC)-to-DC converter 44, an air conditioning compressor 46, a compressor inverter 48, a power feed outlet 50, and a power feed inverter 52.

The battery unit 26 has a casing 26a, a battery 26b, and a system main relay 26c, and is configured to be capable of being charged and discharged. The casing 26a accommodates therein the battery 26b and the system main relay 26c. The battery 26b has one or more secondary battery cells. The secondary battery cells may be lithium-ion battery cells or all-solid-state battery cells, for example, although not limited thereto in particular. The battery unit 26 is disposed under the floor panel 16.

The motor unit 28 is electrically connected to the battery 26b via the PCU 30 and the system main relay 26c. The motor unit 28 is connected to the front wheels 14f via a speed reducer (omitted from illustration). The motor unit 28 has a traction motor that drives the front wheels 14f using electric power supplied from the battery 26b. Note however, the motor unit 28 is not limited to driving the front wheels 14f, and it is sufficient to drive at least one of the wheels 14f and 14r. The motor unit 28 may be disposed in the front compartment 12f.

The PCU 30 is electrically connected to each of the battery 26b and the motor unit 28. The PCU 30 includes an inverter, a converter, and so forth. The PCU 30 controls supplied electric power between the battery 26b and the motor unit 28. Alternatively, when the vehicle 10 decelerates, the PCU 30 controls regenerative electric power supplied from the motor unit 28 to the battery 26b. Note that the PCU 30 may be disposed in the front compartment 12f and also above the motor unit 28, although not limited thereto in particular.

The relay unit 32 is electrically connected to the battery 26b via the system main relay 26c. Also, the relay unit 32 is electrically connected to each of a plurality of electric units 40, 44, 48, and 52. The relay unit 32 electrically relays between the battery 26b and the electric units 40, 44, 48, and 52. The electric units 40, 44, 48, and 52 include the charging inlet 40, a DC-to-DC converter 44, the compressor inverter 48, and the power feed inverter 52, although not limited thereto in particular. The relay unit 32 is disposed inside the rear compartment 12r, and more specifically, is disposed below the luggage room 12r1. The relay unit 32 is disposed between the wheel wells 20 in the right-left direction. More specifically, at least one outer peripheral surface of the relay unit 32 faces a wheel well 20. Specifically, the relay unit 32 is closer to the wheel well 20 than the other electric units 44, 48, 52, and so forth, which are disposed inside the rear compartment 12r.

The charging inlet 40 is situated at the rearward portion of the vehicle body 12. The charging inlet 40 is connected to an external direct current power supply via a cable 2. The charging inlet 40 is configured so that a connector 4 of the cable 2 is detachably attachable. The external direct current power supply is, for example, a charging station or the like. The charging inlet 40 receives charging electric power from an external direct current power supply to charge the battery 26b.

The auxiliary battery 42 has a secondary battery cell and is configured to be capable of being charged and discharged. The rated voltage of the auxiliary battery 42 is approximately 12 volts. The auxiliary battery 42 is connected to various types of control systems and other accessories of the vehicle 10, and supplies electric power thereto. The secondary battery cells may be lithium-ion battery cells or all-solid-state battery cells, for example, although not limited thereto in particular. The auxiliary battery 42 is disposed below the luggage room 12r1 of the rear compartment 12r.

The DC-to-DC converter 44 is connected to the auxiliary battery 42. The auxiliary battery 42 is electrically connected to the relay unit 32 via the DC-to-DC converter 44. The DC-to-DC converter 44 is configured to be able to convert the direct current electric power from the battery 26b into low-voltage (e.g., 30 volts or lower) direct current electric power to be supplied to the auxiliary battery 42. The DC-to-DC converter 44 is disposed below the luggage room 12r1 of the rear compartment 12r.

The air conditioning compressor 46 is a device that compresses refrigerant gas in an air conditioning heat pump circuit installed in the vehicle 10. The air conditioning compressor 46 is connected to the relay unit 32 via a compressor inverter 48. The compressor inverter 48 is configured to be able to convert direct current electric power from the battery 26b into alternating current power to be supplied to the air conditioning compressor 46. The compressor inverter 48 adjusts the supplied electric power to the air conditioning compressor 46 to control operations of the air conditioning compressor 46. The compressor inverter 48 is disposed below the luggage room 12r1 of the rear compartment 12r.

The power feed outlet 50 is configured such that electric equipment can be detachably attached thereto. The power feed outlet 50 outputs direct current electric power to the electric equipment. The power feed outlet 50 is configured to be capable of high-output power feeding, from 600 watts or more to 1500 watts or less for example, although not limited thereto in particular. Electric equipment referred to here includes, for example, home appliances (such as hair dryers, water boilers, and so forth), personal computers, smartphones, tablet terminals, and the like. The power feed outlet 50 is disposed inside the cabin 12c.

The power feed inverter 52 is connected to the power feed outlet 50. The power feed outlet 50 is connected to the relay unit 32 via the power feed inverter 52. The power feed inverter 52 is configured to be capable of converting direct current electric power from the battery 26b into alternating current electric power that is supplied to the outside of the vehicle 10 through the power feed outlet 50. The power feed inverter 52 is disposed below the luggage room 12r1 of the rear compartment 12r. Here, the power feed inverter 52 is an example of a "power feeding electric power conversion circuit" in the present technology.

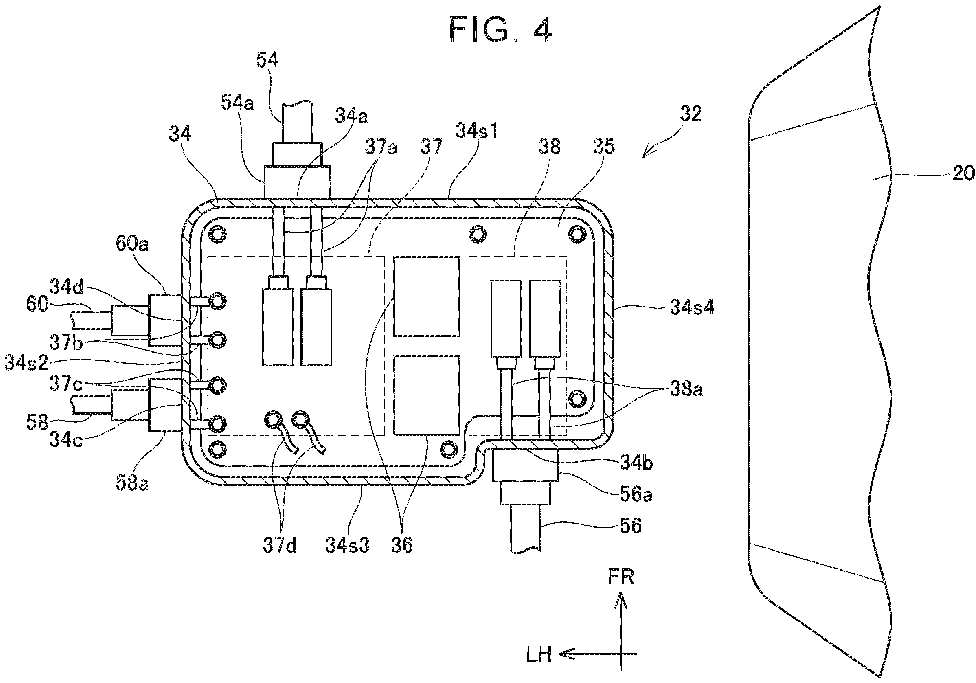

The configuration of the relay unit 32 will be described in detail with reference to FIGS. 2 and 4. As illustrated in FIG. 2, the relay unit 32 is electrically connected to the battery 26b via the system main relay 26c and a first cable 54. The first cable 54 has a first connector 54a. The first connector 54a is configured to be detachably attachable to the relay unit 32. The relay unit 32 is connected to the charging inlet 40 via a second cable 56. The second cable 56 has a second connector 56a. The second connector 56a is configured to be detachably attachable to the relay unit 32. The relay unit 32 is connected to the DC-to-DC converter 44 via a third cable 58. The third cable 58 has a third connector 58a. The third connector 58a is configured to be detachably attachable to the relay unit 32. The relay unit 32 is connected to the compressor inverter 48 via a fourth cable 60. The fourth cable 60 has a fourth connector 60a. The fourth connector 60a is configured to be detachably attachable to the relay unit 32. The relay unit 32 is connected to the power feed inverter 52 via a fifth cable 62. The fifth cable 62 has a fifth connector 62a. The fifth connector 62a is configured to be detachably attachable to the relay unit 32.

As illustrated in FIG. 4, the relay unit 32 has a casing 34. The casing 34 is made up of a metal such as an aluminum-based material or the like, for example. The casing 34 has a generally cuboid shape, with an upper surface and a lower surface (omitted from illustration) and a front side surface 34s1, a left side surface 34s2, a rear side surface 34s3, and a right side surface 34s4, disposed therebetween. The right side surface 34s4 of the casing 34 faces the wheel well 20 situated at the right end of the vehicle body 12. The casing 34 has a first connector port 34a, a second connector port 34b, a third connector port 34c, a fourth connector port 34d, and a fifth connector port 34e. As an example, the first connector port 34a is situated on a front side surface 34s1 of the casing 34. The second connector port 34b is situated on the rear side surface 34s3 of the casing 34. The third connector port 34c and the fourth connector port 34d are situated on the left side surface 34s2 of the casing 34. The fifth connector port 34e is situated on the upper surface of the casing 34, and is omitted from illustration in FIG. 4.

As illustrated in FIGS. 2 and 4, the first connector port 34a is configured such that the first connector 54a of the first cable 54 is detachably attachable thereto, and is electrically connected to the battery 26b via the system main relay 26c and the first cable 54. The second connector port 34b is configured such that the second connector 56a of the second cable 56 is detachably attachable thereto, and is electrically connected to the charging inlet 40 via the second cable 56. The third connector port 34c is configured such that the third connector 58a of the third cable 58 is detachably attachable thereto, and is electrically connected to the DC-to-DC converter 44 via the third cable 58. The fourth connector port 34d is configured such that the fourth connector 60a of the fourth cable 60 is detachably attachable thereto, and is electrically connected to the compressor inverter 48 via the fourth cable 60. The fifth connector port 34e is configured such that the fifth connector 62a of the fifth cable 62 is detachably attachable thereto, and is electrically connected to the power feed inverter 52 via the fifth cable 62.

The relay unit 32 has an electric circuit unit 35 inside the casing 34. The electric circuit unit 35 has a pair of relays 36, a first electric circuit 37, and a second electric circuit 38. The first electric circuit 37 is electrically connected to one end (first terminal) of each of the relays 36, and the second electric circuit 38 is electrically connected to the other end (second terminal) of each of the relays 36. That is to say, inside the relay unit 32, the first electric circuit 37 is electrically connected to the second electric circuit 38 via the relays 36.

The relays 36 are disposed between the first electric circuit 37 and the second electric circuit 38. The first electric circuit 37 is disposed in a left side portion of the casing 34, and is situated between the relays 36 and the left side surface 34s2 of the casing 34 in plan view. The second electric circuit 38 is disposed in a right side portion of the casing 34, and is situated between the relays 36 and the right side surface 34s4 of the casing 34 in plan view. As a result, in the vehicle 10, the first electric circuit 37 is situated further on an inner side of the vehicle in the right-left direction than the second electric circuit 38.

The first electric circuit 37 has a pair of bus bars 37a connected to the first connector port 34a. As described above, the battery 26b is electrically connected to the first connector port 34a via the system main relay 26c and the first cable 54. When the vehicle 10 is traveling, the system main relay 26c is closed, and the motor unit 28 is electrically connected to the battery 26b. When the system main relay 26c is closed, the first connector port 34a is electrically connected to the battery 26b via the system main relay 26c. As a result, while the vehicle 10 is traveling, a high voltage is applied to the first electric circuit 37 from the battery 26b, and the first electric circuit 37 is maintained in a live state. Accordingly, the first electric circuit 37 is electrically connected to the battery 26b, and also electrically connects the battery 26b to one end of each of the relays 36.

The first electric circuit 37 further has a pair of bus bars 37b connected to the third connector port 34c. Accordingly, the first electric circuit 37 is electrically connected to the DC-to-DC converter 44 via the third cable 58 that is connected to the third connector port 34c. The first electric circuit 37 further has a pair of bus bars 37c connected to the fourth connector port 34d. Thus, the first electric circuit 37 is electrically connected to the compressor inverter 48 via the fourth cable 60 that is connected to the fourth connector port 34d. The first electric circuit 37 further has a pair of bus bars 37d connected to the fifth connector port 34e. Accordingly, the first electric circuit 37 is electrically connected to the power feed inverter 52 via the fifth cable 62 that is connected to the fifth connector port 34e.

The second electric circuit 38 has a pair of bus bars 38a connected to the second connector port 34b. As described above, the charging inlet 40 is electrically connected to the second connector port 34b via the second cable 56. Accordingly, the second electric circuit 38 is electrically connected to the charging inlet 40 and also electrically connects the charging inlet 40 to the other ends of the relays 36.

The relays 36 are opened and closed by, for example, an electronic control unit (ECU) of the vehicle 10. When the relays 36 are in an open state, the second electric circuit 38 is disconnected from the first electric circuit 37. When the relays 36 are in a closed state, the second electric circuit 38 is electrically connected to the first electric circuit 37 and is electrically connected to the battery 26b. As described above, the charging inlet 40 is electrically connected to the second electric circuit 38. Accordingly, when the battery 26b of the vehicle 10 is being charged, for example, the relays 36 are closed. On the other hand, when the vehicle 10 is traveling, the relays 36 are maintained in an open state. Note that the number of relays 36 is not limited to two. The control device may use a single relay 36 or three or more relays 36 to control the connection/disconnection of the second electric circuit 38 to the first electric circuit 37.

In the event of a collision (e.g., a broadside or rear-end collision) of the vehicle 10 described above, there is a risk that a part of the vehicle body 12, such as the wheel well 20 or the like of the vehicle 10, or another adjacent onboard unit or the like, will come into contact with the relay unit 32. At this time, it is conceivable that the casing 34 of the relay unit 32 will be damaged, causing the electric circuit inside the casing 34 to be externally exposed. The battery 26b is electrically connected to the relay unit 32, and accordingly even when the casing 34 is damaged, it is desirable to suppress externally exposing the electric circuit electrically connected to the battery 26b.

With respect to this point, in the vehicle 10 of the present embodiment, the relays 36 are provided in the relay unit 32, and the electric circuit in the relay unit 32 is divided into the first electric circuit 37 and the second electric circuit 38 with the relays 36 as a boundary. The first electric circuit 37, which is electrically connected to the battery 26b, is situated further on the inner side of the vehicle than the second electric circuit 38 in the right-left direction. According to this configuration, even when the casing 34 of the relay unit 32 is damaged from a sideward direction of the vehicle (the right side in the present embodiment), the first electric circuit 37 is suppressed from being externally exposed from the casing 34. On the other hand, although there is a risk that the second electric circuit 38 may be externally exposed from the casing 34, the second electric circuit 38 can be electrically disconnected from the battery 26b by the relays 36. In particular, in the vehicle 10 according to the present embodiment, the relays 36 are maintained in an open state while the vehicle 10 is traveling. Thus, the second electric circuit 38 is maintained in a non-live state, and accordingly the safety of the vehicle 10 can be improved even when the second electric circuit 38 is exposed due to a collision of the vehicle 10.

In the vehicle 10 according to the present embodiment, the relay unit 32 is disposed between the wheel wells 20 in the right-left direction. According to this configuration, when a collision (e.g., a right-side broadside collision or a rear-end collision) of the vehicle 10 occurs, there is a risk that the wheel well 20, which has a relatively high rigidity, will come into contact with the relay unit 32. In this case, the likelihood of the casing 34 of the relay unit 32 being damaged is even higher. However, adopting the present technology enables externally exposing the first electric circuit 37 from the casing 34 to be avoided or suppressed. This reduces the risk of contact between the first electric circuit 37, which is applied with a high voltage and is in a live state, and surrounding members or occupants of the vehicle 10, thereby improving the safety of the vehicle 10.

In the vehicle 10 according to the present embodiment, the relay unit 32 is situated below the luggage room 12r1 in the rear compartment 12r. As can be seen from FIGS. 1 and 3, the space situated below the luggage room 12r1 is narrower than other spaces, and various electric units are disposed inside this space. Even though placement of the relay unit 32 is restricted in such a relatively narrow space, external exposure of the first electric circuit 37 from the casing 34 can be avoided or suppressed. However, the position of the relay unit 32 is not limited to being below the luggage room 12r1 in the rear compartment 12r. The relay unit 32 may be disposed in the luggage room 12r1, may be disposed in the front compartment 12f, or may be disposed below the floor panel 16.

In the vehicle 10 according to the present embodiment, the power feed outlet 50 is disposed inside the cabin 12c. However, in a modification, the position of the power feed outlet 50 does not have to be in the cabin 12c, and may be inside the luggage room 12r1.

The charging inlet 40 according to the present embodiment is an example of "electric unit" according to the present technology. However, the "electric unit" in the present technology, i.e., the electric unit connected to the second electric circuit 38, is not limited to being the charging inlet 40, and may be various other types of electric units. In this case, the electric unit may be an electric unit that is not expected to be used while the vehicle 10 is traveling. For example, a power feed outlet disposed in a space other than the cabin 12c (e.g., in the luggage room 12r1) corresponds to an example of an "electric unit" in the present technology when not expected to be used while the vehicle 10 is traveling. Also, in the present embodiment, a collision of a severity in which the second electric circuit 38 is exposed from the casing 34 is exemplified, but the severity of the collision is not limited to this. According to the present technology, effects of a collision on the first electric circuit 37 can be reduced regardless of the severity of the collision on the vehicle 10.

## Claims

1. A vehicle (10) comprising:
a vehicle body (12);
a plurality of wheels (14f; 14r) that supports the vehicle body (12);
a motor (28) that drives at least one of the wheels (14f; 14r);
a battery (26b) that is electrically connected to the motor (28);
a relay unit (32) that is electrically connected to the battery (26b); and
at least one electric unit (40) that is electrically connected to the relay unit (32), wherein
the relay unit (32) includes
a casing (34),
at least one relay (36) that is disposed inside the casing (34) and that includes a first terminal and a second terminal,
a first electric circuit (37) that is disposed inside the casing (34) and that electrically connects the battery (26b) to the first terminal of the relay (36), and
a second electric circuit (38) that is disposed inside the casing (34) and that electrically connects the at least one electric unit (40) to the second terminal of the relay (36), and
the first electric circuit (37) is situated further toward an inward side of the vehicle (10) than the second electric circuit (38), in a right-left direction of the vehicle (10).

2. The vehicle (10) according to claim 1, wherein
the vehicle body (12) includes a wheel well (20) that accommodates one wheel of the wheels (14f; 14r), and
at least one outside surface of the casing (34) faces the wheel well (20) in the right-left direction of the vehicle (10).

3. The vehicle (10) according to claim 2, wherein
the vehicle body (12) includes a rear compartment (12r) situated at a rearward portion of the vehicle body (12), and
the relay unit (32) is disposed in the rear compartment (12r).

4. The vehicle (10) according to claim 3, wherein
the rear compartment (12r) includes a luggage room (12r1), and
the relay unit (32) is disposed in the rear compartment (12r), and is situated below the luggage room (12r1).

5. The vehicle (10) according to any one of claims 1 to 4, wherein the relay (36) is maintained in an open state while the vehicle (10) is travelling.

6. The vehicle (10) according to claim 5, wherein the relay (36) is configured to electrically disconnect the second electric circuit (38) from the battery (26b) when the relay (36) is in the open state.

7. The vehicle (10) according to any one of claims 1 to 4, wherein the at least one electric unit (40) includes a charging inlet (40) to which an external direct current power supply is detachably connected.

8. The vehicle (10) according to claim 1, further comprising an air conditioning compressor (46) that is connected to the first electric circuit (37) of the relay unit (32).

9. The vehicle (10) according to claim 1, further comprising:
an auxiliary battery (42); and
a direct current-to-direct current converter (44), wherein
the auxiliary battery (42) is connected to the first electric circuit (37) of the relay unit (32) via the direct current-to-direct current converter (44), and
the direct current-to-direct current converter (44) is configured to convert direct current electric power from the battery (26b) into low-voltage direct current electric power that is supplied to the auxiliary battery (42).

10. The vehicle (10) according to claim 1, further comprising:
a power feed outlet (50); and
an inverter (52) for power feeding, wherein
the power feed outlet (50) is connected to the first electric circuit (37) of the relay unit (32) via the inverter (52), and
the inverter (52) is configured to convert direct current electric power from the battery (26b) into alternating current electric power that is supplied to an outside of the vehicle (10) through the power feed outlet (50).
